# EUROPÄISCHE PATENTANMELDUNG

(11) **EP 0 709 175 A2**
(43) Veröffentlichungstag der Anmeldung: **01.05.1996**
(21) Anmeldenummer: 95114354.4
(22) Anmeldetag: 13.09.1995
(51) Int. Cl.: B29C 47/10, B29C 47/58

(54) **Schneckenextruder**

(30) Priorität: 26.10.1994 DE 4438169
(71) Anmelder: Battenfeld Extrusionstechnik GmbH, D-32547 Bad Oeynhausen (DE)
(72) Erfinder: Witt, Reinhard, D-32547 Bad Oeynhausen (DE); Jäcker, Manfred, D-32547 Bad Oeynhausen (DE)
(74) Vertreter: Müller, Gerd

(57) **Zusammenfassung**

Für einen Schneckenextruder (1), insbesondere ein Doppelschneckenextruder, zur kontinuierlichen Verarbeitung plastischer Kunststoffmassen, bei dem zur Einspeisung der zu verarbeitenden Rohstoffe die Einfüllöffnung (6) des Schneckenzylinders (2) mit einem Speisegerät, einem Trichter (7) oder dergleichen ausgestattet ist bzw. in Verbindung steht, wird vorgeschlagen, daß der Einfüllöffnung (6) am Schneckenzylinder (2) die Transport- bzw. Arbeitsrichtung der Schnecke bzw. Schnecken (3) eine besondere Zuführöffnung (9) für Zuschlagstoffe, z.B. Regenerate, Granulate, Farbbatches usw., vorgeordnet ist, und daß dabei die Schnecke bzw. Schnecken (3) bereits im Bereich der Zuführöffnung (9) mit Schneckenstegen (4) und Schneckengängen versehen ist bzw. sind.

## Beschreibung

Die Erfindung betrifft einen Schneckenextruder, insbesondere Doppelschneckenextruder, zur kontinuierlichen Verarbeitung plastischer Kunststoffmassen, bei dem zur Einspeisung des als Pulver, Agglomerat oder auch Granulat aufgegebenen Rohstoffs die Einfüllöffnung des Schneckenzylinders mit einem Speisegerät, einem Trichter oder dergleichen ausgestattet ist bzw. in Verbindung steht.

Bei derartigen Schneckenextrudern besteht oft die Notwendigkeit, außer den Rohstoffen für die plastischen Kunststoffmassen auch noch Zuschlagstoffe, z.B. Regenerate, Granulate, Farbbatches usw. zuzugeben, welche im Verlauf des Plastifizierungsvorgangs in die Kunststoffmasse eingearbeitet werden, damit diese ihre für die Herstellung des jeweiligen Endproduktes benötigte Beschaffenheit erhält.

Es ist dabei bekannt und üblich, die Zuschlagstoffe entweder in das Speisegerät, den Trichter oder dergleichen des Schneckenextruders selbst einzugeben oder aber sie in einem Bereich einzuspeisen, welcher zwischen dem Speisegerät/Trichter und dem Schneckenzylinder liegt.

Diese Art der Einbringung von Zuschlagstoffen hat sich jedoch in der Praxis als nachteilig erwiesen, weil ihre gleichmäßige Vermischung mit den die eigentlichen Kunststoffmassen bildenden Rohstoffen nicht gewährleistet ist. Der sich in den Schneckengängen bei der Umwandlung des Rohmaterials zu den plastischen Kunststoffmassen aufbauende Gegendruck wirkt nämlich einer einwandfrei gleichmäßigen Untermischung der Zuschlagstoffe nachhaltig entgegen.

Wenn es sich bei den Zuschlagstoffen um Farbmittel handelt, ist es darüber hinaus von beträchtlichem Nachteil, daß bei jedem notwendigen Farbwechsel ein beträchtlicher Reinigungsaufwand für das Speisegerät, den Trichter oder dergleichen getrieben werden muß.

Ziel der Erfindung ist es, ein Schneckenextruder, insbesondere Doppelschneckenextruder der eingangs spezifizierten Gattung so auszugestalten, daß diesem bei Bedarf in die plastischen Kunststoffmassen einzuarbeitende Zuschlagstoffe problemlos zugeführt werden können.

Gelöst wird diese Aufgabe dadurch, daß der - vom Speisegerät, Trichter oder dergleichen beaufschlagten - Einfüllöffnung am Schneckenzylinder in Transport- bzw. Arbeitsrichtung der Schnecke (n) eine besondere Zuführöffnung für die Zuschlagstoffe, z.B. Regenerate, Granulate, Farbbatches usw., vorgeordnet ist und daß dabei die Schnecke (n) bereits im Bereich der besonderen Zuführöffnung mit Schneckengängen versehen ist (sind).

Der Vorteil dieser Bauart eines Schneckenextruders liegt darin, daß eine kontinuierliche Zuführung von Zuschlagstoffen ohne Gegendruck möglich ist und dadurch eine gleichmäßige Untermischung derselben mit den Rohstoffen für die plastischen Kunststoffmassen ermöglicht wird. Da das Speisegerät, der Trichter oder dergleichen an der Einfüllöffnung einschließlich mit den Rohstoffen für die plastischen Kunststoffmassen beschickt werden kann, wird außerdem bei einer Zuführung von Farbmitteln der ansonsten für jeden Farbwechsel notwendige Reinigungsaufwand am Speisegerät, Trichter oder dergleichen unnötig.

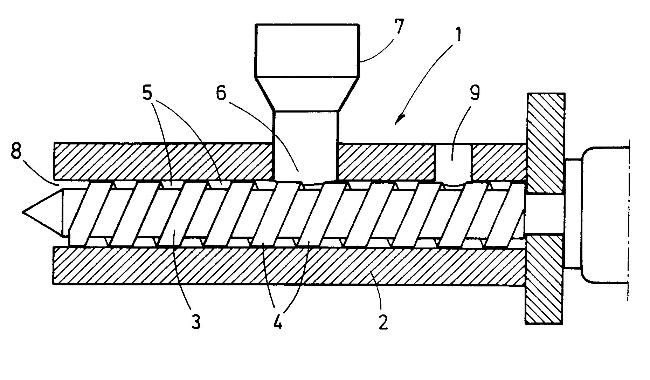

Der in der Zeichnung rein schematisch dargestellte Extruder 1 zur Verarbeitung plastischer Kunststoffmassen hat als wesentliche Bestandteile ein als Schneckenzylinder 2 bezeichnetes stationäres Gehäuse und mindestens eine in dessen Innerem drehantreibbar aufgenommene Schnecke 3 mit schraubenförmig verlaufenden Schneckenstegen 4, zwischen denen entsprechend schraubenförmig verlaufende Schneckengänge 5 eingegrenzt sind.

Die vom Extruder 1 zu den plastischen Kunststoffmassen zu verarbeitenden Rohstoffe werden durch eine Einfüllöffnung 6 des Schneckenzylinders 2 mit Hilfe eines Speisegerätes oder eines Trichters 7 in den Arbeitsbereich der Schnecke 3 - bei einem Doppelschneckenextruder in den Bereich zweier parallel arbeitender Schnecken 3 - gebracht und innerhalb des Schneckenzylinders 2 von den Schneckenstegen 4 und den Schneckengängen 5 während der Transportbewegung zum Austrittsende 8 hin zur Kunststoffmasse plastifiziert.

Oft ist es notwendig, den zur plastischen Kunststoffmasse zu verarbeitenden Rohstoffen und/oder der plastifizierten Kunststoffmasse Zuschlagstoffe, wie Regenerate, Granulate, Farbbatches usw. möglichst gleichmäßig zu untermischen, bevor diese Kunststoffmassen als plastifizierte Schmelze das Austrittsende 8 des Extruders 1 verlassen.

Damit eine kontinuierliche Einspeisung dieser Zuschlagstoffe in die Rohstoffe möglich ist, ohne daß ein aus der Verarbeitung der Rohstoffe im Extruder 1 resultierender Gegendruck hinderlich wirkt, ist der Einfüllöffnung 6 am Schneckenzylinder 2 in Transport- bzw. Arbeitsrichtung der Schnecke bzw. Schnecken 3 eine besondere Zuführöffnung 9 vorgeordnet. Wichtig ist dabei, daß die Schnecke bzw. Schnecken 3 des Extruders 1 bereits im Bereich der Zuführöffnung 9 mit Schneckenstegen 4 und Schneckengängen 5 versehen ist bzw. sind, damit die Zuschlagstoffe von dort aus kontinuierlich in Richtung der Einfüllöffnung 6 transportiert werden können, um dort auf dem Transportweg zum Austrittsende 8 hin mit den Rohstoffen und der sich daraus bildenden plastischen Kunststoffmasse vermischt werden können.

Da das zur Beschickung der Einfüllöffnung 6 dienende Speisegerät bzw. der Trichter 7 nur bzw. ausschließlich das zur Kunststoffmasse zu plastifizierende Rohmaterial aufnehmen muß, ergibt sich der Vorteil, daß eine Verunreinigung durch die Zuschlagstoffe nicht stattfinden kann, daß also dann, wenn die Zuschlagstoffe Farbmittel sind oder enthalten, bei einem Farbwechsel die vorherige Reinigung des Speisegerätes bzw. Trichters 7 nicht nötig ist.

### Liste der Bezugszeichen

- 1: Extruder
- 2: Schneckenzylinder
- 3: Schnecke
- 4: Schneckenstege
- 5: Schneckengänge
- 6: Einfüllöffnung
- 7: Speisegerät/Trichter
- 8: Austrittsende
- 9: Zuführöffnung

## Patentansprüche

1. Schneckenextruder, insbesondere Doppelschneckenextruder zur kontinuierlichen Verarbeitung plastischer Kunststoffmassen, bei dem zur Einspeisung des zu verarbeitenden Rohstoffs die Einfüllöffnung des Schneckenzylinders mit einem Speisegerät, einem Trichter oder dergleichen ausgestattet ist bzw. in Verbindung steht,
**dadurch gekennzeichnet;**
daß der Einfüllöffnung (6) am Schneckenzylinder (2) in Transport- bzw. Arbeitsrichtung der Schnecke bzw. Schnecken (3) eine besondere Zuführöffnung (9) für Zuschlagstoffe, z.B. Regenerate, Granulate, Farbbatches usw., vorgeordnet ist,
und daß dabei die Schnecke bzw. Schnecken (3) bereits im Bereich der Zuführöffnung (9) mit Schneckenstegen (4) und Schneckengängen (5) versehen ist bzw. sind.
